(19) Europäisches Patentamt / European Patent Office / Office européen des brevets

(11) **EP 3 611 035 B1**

(12) **EUROPEAN PATENT SPECIFICATION**

(45) Date of publication and mention
of the grant of the patent:
**16.03.2022 Bulletin 2022/11**

(21) Application number: **18785148.0**

(22) Date of filing: **09.04.2018**

(51) International Patent Classification (IPC):
**B60C 9/00** (2006.01)  **B60C 9/20** (2006.01)
**D07B 1/06** (2006.01)

(52) Cooperative Patent Classification (CPC):
**B60C 9/00; B60C 9/20; D07B 1/06**

(86) International application number:
**PCT/JP2018/014965**

(87) International publication number:
**WO 2018/190308 (18.10.2018 Gazette 2018/42)**

(54) **ELASTOMER-METAL CORD COMPOSITE AND TIRE USING SAME**

ELASTOMER-METALLKORD-VERBUNDSTOFF UND REIFEN DAMIT

COMPOSITE ÉLASTOMÈRE-FIL CÂBLÉ MÉTALLIQUE ET PNEU L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2017 JP 2017078439**

(43) Date of publication of application:
**19.02.2020 Bulletin 2020/08**

(73) Proprietor: **Bridgestone Corporation
Tokyo 104-8340 (JP)**

(72) Inventor: **UEMURA Kazuki
Tokyo 104-8340 (JP)**

(74) Representative: **Oxley, Robin John George
Marks & Clerk LLP
15 Fetter Lane
London EC4A 1BW (GB)**

(56) References cited:
**EP-A2- 1 256 652      JP-A- H0 913 288
JP-A- H06 235 179     JP-A- H07 145 578
JP-A- H07 157 986     JP-A- S49 134 783
JP-A- 2000 129 583    JP-A- 2000 190 707
JP-A- 2000 190 707    JP-A- 2000 198 311
JP-A- 2000 198 311**

**Description**

TECHNICAL FIELD

The present invention relates to an elastomer-metal cord composite and a tire. More particularly, the present invention relates to: an elastomer-metal cord composite obtained by coating, with an elastomer, a metal cord composed of a bundle of metal filaments that are parallelly aligned without being twisted together; and a tire including the same.

BACKGROUND ART

In recent years, there is an increasing demand for weight reduction of tires for the purpose improving the fuel efficiency of automobiles. As means for reducing the tire weight, metal cords for belt reinforcement have been drawing attention, and a large number of techniques for using metal filaments as a belt cord without twisting have been disclosed. For example, Patent Document 1 proposes a tire in which, for improvement of lightweightness and durability, a belt layer is constituted by at least two belt plies each obtained by arranging metal filament bundles along the width direction in a coating rubber, the metal filament bundles being formed by parallelly aligning small-diameter metal filaments at a high tensile strength without twisting. In this tire, the number of the metal filaments in each metal filament bundle is optimized in accordance with the metal filament diameter. Further, it is also proposed to adjust the thickness of the metal filament bundles in the radial direction to have a specific ratio with respect to the thickness of the belt plies. Attention is also drawn to the disclosures of JP2000-198311A, EP1256652A2 and JP2000-190707A.

RELATED ART DOCUMENT

PATENT DOCUMENT

[Patent Document 1] JP2001-334810A

SUMMARY OF THE INVENTION

PROBLEMS TO BE SOLVED BY THE INVENTION

However, in Patent Document 1, although the lightweightness and the durability were examined, no examination was made on other performance. Therefore, in the use of metal filaments as a belt cord without twisting, there is expected to be a demand for further improvement as the tire performance is improved in the future.

In view of the above, an object of the present invention is to provide: an elastomer-metal cord composite capable of improving the performance of a tire, in which composite a metal cord composed of a bundle of metal filaments that are parallelly aligned without being twisted together is coated with an elastomer; and a tire including the same.

MEANS FOR SOLVING THE PROBLEMS

The present inventor intensively studied to solve the above-described problems and obtained the following findings as a result. That is, the use of a metal cord obtained by bundling metal filaments without twisting them together suppresses in-plane deformation of the metal cord when a compressive input is made to a belt treat, and this leads to deterioration of the fatigue characteristics of the metal cord. In addition, in a metal cord obtained by bundling metal filaments without twisting them together, a rubber hardly infiltrates between adjacent metal filaments, and this causes the generation of a non-rubber-coated region where metal filaments are not coated with the rubber. Accordingly, the metal filaments are displaced from each other during tire rolling and, due to the resulting reduction in the in-plane rigidity, the steering stability may be impaired. Based on these findings, the present inventor further intensively studied and consequently discovered that the above-described problems can be solved by adopting the following constitution for a bundle of metal filaments, thereby completing the present invention.

That is, the present invention provides an elastomer-metal cord composite as claimed in claim 1.

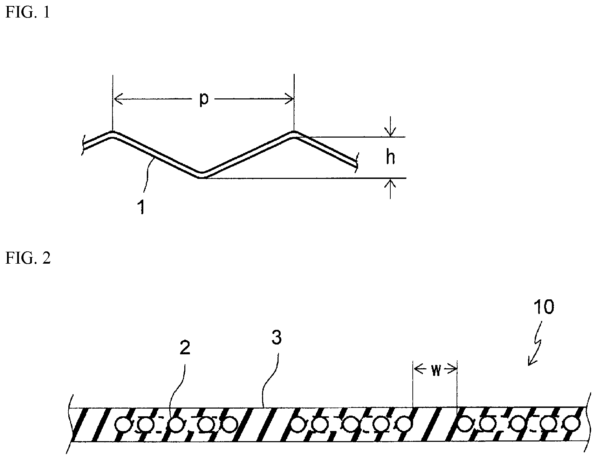

FIG. 1 is a drawing of a metal filament that describes the definitions of a patterning amount (h) and a patterning pitch (p) of the metal filament, and the "patterning amount (h)" refers to the width of undulation not including the wire diameter of a metal filament 1. The patterning amount (h) of the metal filament 1 is measured by projecting an image of the patterned metal filament 1 on a screen or the like using a projector.

In the elastomer-metal cord composite of the present invention, it is preferred that a patterning direction of a patterned metal filament in the metal cord corresponds to a width direction of the metal cord. In the elastomer-metal cord composite of the present invention, it is also preferred that the adjacent metal filaments have an elastomer coating ratio of 10% or higher per unit length on a widthwise side surface of the metal cord. Further, in the elastomer-metal cord composite of the present invention, it is preferred that the straight metal filament and the patterned metal filament be alternately arranged. Still further, in the elastomer-metal cord composite of the present invention, it is preferred that the metal filaments have a patterning amount of 0.03 to 0.30 mm and a patterning pitch of 2 to 30 mm. It is noted here that, in the elastomer-metal cord composite of the present invention, the "straight metal filament" refers to a metal filament that is not intentionally patterned and is thus in a substantially unpatterned state.

The term "elastomer coating ratio" used herein refers to, for example, when a rubber is used as the elastomer, a value calculated based on the following equation after coating the elastomer-metal cord composite of the present invention with the rubber, pulling out a steel cord from the resulting rubber-steel cord composite, and then measuring the length of a rubber-coated part of the steel cord:

$$\text{Elastomer coating ratio} = (\text{Rubber-coated length/Sample length}) \times 100\ (\%)$$

The elastomer coating ratio can be calculated in the same manner also when an elastomer other than a rubber is used as the elastomer.

A tire of the present invention is characterized by including the elastomer-metal cord composite of the present invention.

EFFECTS OF THE INVENTION

According to the present invention, an elastomer-metal cord composite capable of improving the performance of a tire, in which composite a metal cord composed of a bundle of metal filaments that are parallelly aligned without being twisted together is coated with an elastomer, and a tire including the same can be provided.

BRIEF DESCRIPTION OF THE DRAWINGS

[FIG. 1] FIG. 1 is a drawing of a metal filament that describes the definitions of a patterning amount (h) and a patterning pitch (p) of the metal filament.

[FIG. 2] FIG. 2 is a widthwise partial cross-sectional view illustrating an elastomer-metal cord composite according to one preferred embodiment of the present invention.

[FIG. 3] FIG. 3 is a schematic plan view illustrating a metal cord of the elastomer-metal cord composite according to one preferred embodiment of the present invention.

[FIG. 4] FIG. 4 is a schematic widthwise cross-sectional view illustrating the metal cord of the elastomer-metal cord composite according to one preferred embodiment of the present invention.

[FIG. 5] FIG. 5 is a schematic widthwise cross-sectional view illustrating a metal cord of an elastomer-metal cord composite according to another preferred embodiment of the present invention.

[FIG. 6] FIG. 6 is a schematic half cross-sectional view illustrating a tire according to one preferred embodiment of the present invention.

MODE FOR CARRYING OUT THE INVENTION

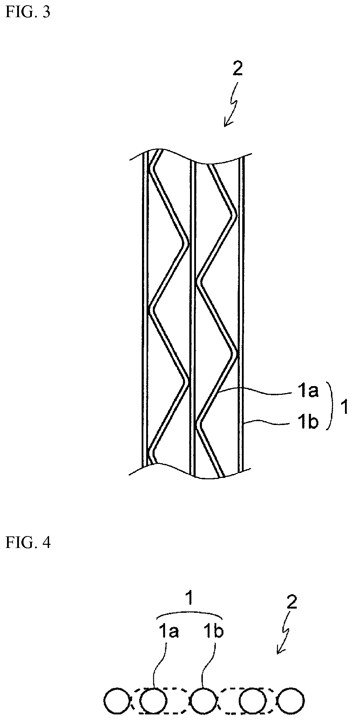

The elastomer-metal cord composite of the present invention will now be described in detail referring to the drawings. FIG. 2 is a widthwise partial cross-sectional view illustrating an elastomer-metal cord composite according to one preferred embodiment of the present invention; FIG. 3 is a schematic plan view illustrating a metal cord of the elastomer-metal cord composite according to one preferred embodiment of the present invention; FIG. 4 is a schematic widthwise cross-sectional view illustrating the metal cord of the elastomer-metal cord composite according to one preferred embodiment of the present invention. An elastomer-metal cord composite 10 of the present invention is obtained by coating, with an elastomer 3, a metal cord 2 composed of a bundle of two to ten, preferably five to nine metal filaments 1 that are parallelly aligned in a single row without being twisted together. In the illustrated example, five metal filaments 1 are parallelly aligned without being twisted together, forming the metal cord 2.

In the metal cord 2 according to the elastomer-metal cord composite 10 of the present invention, there exists at least one pair of adjacent metal filaments 1 that are different from each other in at least either of the patterning amount and the patterning pitch in a direction perpendicular to an extending direction of the metal filaments 1. Preferably, in 50% or more of such a pair, at least either of the patterning amount and the patterning pitch in the direction perpendicular to the extending direction of the metal filaments 1 is different between the adjacent metal filaments 1. In the illustrated example, patterned metal filaments 1a and unpatterned metal filaments 1b (patterning amount = 0 mm, patterning pitch = ∞ mm) are alternately arranged; however, metal filaments having different patterning amounts may be alternately arranged, or metal filaments having different patterning pitches may be alternately arranged. With regard to the arrangement of the metal filaments constituting a bundle, it is preferred that both side portions be constituted by an unpatterned straight metal filament. In this manner, in the elastomer-metal cord composite 10 of the present invention, by adjacently arranging metal filaments 1 that are different in the patterning amount or the patterning pitch, the adjacent metal filaments 1 are prevented from having the same phase. By adopting this constitution, an elastomer is allowed to sufficiently infiltrate between adjacent metal filaments 1, as a result of which the steel cord can undergo out-of-plane deformation when a compressive input is applied thereto, and breakage of the steel cord can thereby be inhibited.

In addition, as described above, in a bundle of metal filaments, an elastomer hardly infiltrates between adjacent filaments, and this causes the generation of a non-elastomer-coated region where filaments are not coated with the elastomer. Accordingly, when a metal cord obtained by bundling metal filaments without twisting them together is used as a cord of a belt, the metal filaments in such a non-elastomer-coated region are displaced from each other during tire rolling, as a result of which the in-plane rigidity of the belt is reduced, and the steering stability may consequently be impaired. However, in the elastomer-metal cord composite 10 of the present invention, since the elastomer 3 sufficiently infiltrates between adjacent metal filaments 1, the above-described defects can be eliminated and, by using the elastomer-metal cord composite 10 of the present invention as a cord of a belt, the in-plane rigidity of the belt can be enhanced and the steering stability can be improved. In order to favorably attain this effect, adjacent metal filaments 1 have an elastomer coating ratio per unit length of preferably 10% or higher, more preferably 20% or higher, on a widthwise side surface of the metal cord 2. The adjacent metal filaments 1 are coated at a ratio of still more preferably 50% or higher, yet still more preferably 80% or higher, most preferably 90% or higher.

In the elastomer-metal cord composite 10 of the present invention, an excessively large patterning amount of the metal filaments 1 makes a distance (w) between the metal cords 2 in the elastomer-metal cord composite 10 short, and this causes a reduction in the belt strength when the elastomer-metal cord composite 10 of the present invention is used as a belt. Accordingly, the patterning amount of the metal filaments 1 is preferably 0.03 to about 0.30 mm. When the patterning amount is greater than 0.30 mm, since the strength of the elastomer-metal cord composite is reduced, the effects of the present invention cannot be sufficiently attained. Particularly, from the standpoints of the distance (w) between the metal cords 2 and the strength of the metal filaments 1, when the metal filaments 1 are patterned, the patterning amount is preferably 0.03 to 0.30 mm, more preferably 0.03 to 0.25 mm, most preferably 0.03 to 0.20 mm. Further, the patterning pitch of the metal filaments 1 is preferably 2 to 30 mm, more preferably 2 to 20 mm, most preferably 3 to 15 mm.

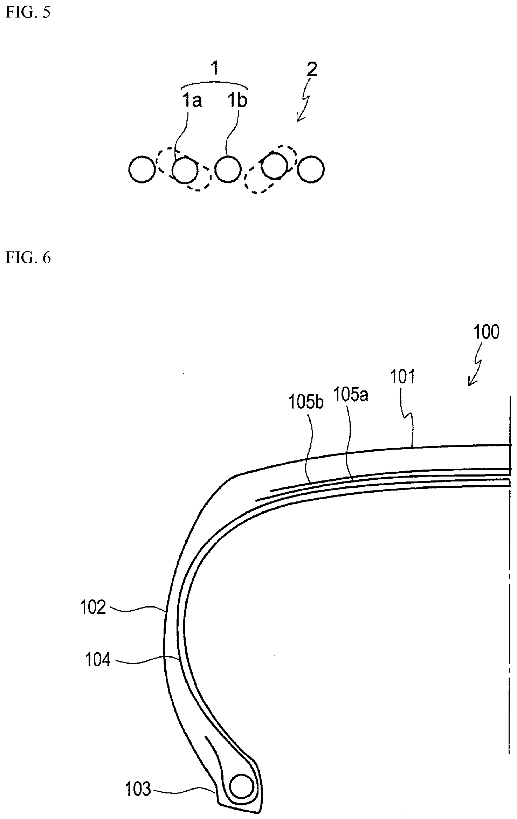

In the metal cord 2 illustrated in FIGs. 3 and 4, the patterned metal filaments 1a are patterned in the width direction of the metal cord 2; however, in the elastomer-metal cord composite 10 of the present invention, the patterning direction of the metal filaments 1a may be tilted with respect to the width direction of the metal cord 2. FIG. 5 is a schematic widthwise cross-sectional view illustrating a metal cord of an elastomer-metal cord composite according to another preferred embodiment of the present invention. Even in this structure, a rubber can sufficiently infiltrates between adjacent metal filaments 1, so that the effects of the invention can be attained. Nevertheless, in the elastomer-metal cord composite 10 of the present invention, from the standpoint of lightweightness, it is more preferred that the patterning direction of adjacent metal filaments 1 be the width direction of the metal cord 2, since this can reduce the thickness of the elastomer-metal cord composite.

Moreover, in the elastomer-metal cord composite 10 of the present invention, at least one of the metal filaments 1 in the metal cord 2 is a substantially straight metal filament. As illustrated in FIGs. 3 and 4, when the unpatterned straight metal filament 1b and the patterned metal filament 1a are adjacent to each other, since the amount of the elastomer infiltrating between these metal filaments 1 is large, the elastomer coating ratio of these adjacent metal filaments 1 on the widthwise side surface of the metal cord 2 is increased, so that the effects of the present invention can be favorably attained. In addition, by using straight metal filaments as the metal filaments 1 arranged on the respective ends of the metal cord 2, the durability can be improved since the distance (w) between adjacent metal cords 2 can be increased in the elastomer. More preferably, as illustrated in FIG. 2, the unpatterned straight metal filament 1b and the patterned metal filament 1a are alternately arranged.

In the elastomer-metal cord composite 10 of the present invention, the "metal filament 1" generally refers to a wire-like metal that contains steel, namely iron, as a main component (the mass of iron exceeds 50% by mass with respect to a total mass of the metal filament), and may be made of iron alone, or may contain a metal other than iron, such as zinc, copper, aluminum, or tin.

In the elastomer-metal cord composite 10 of the present invention, the surface of the metal filament 1 may be treated by plating. The type of the plating is not particularly restricted, and examples thereof include zinc plating, copper plating, brass plating, and bronze plating. Thereamong, brass plating is preferred since a brass-plated metal filament exhibits excellent adhesion with rubber. In the brass plating, the ratio of copper and zinc (copper: zinc) is usually 60:40 to 70:30 based on mass. The thickness of the resulting plated layer is generally 100 nm to 300 nm.

In the elastomer-metal cord composite 10 of the present invention, the wire diameter, the tensile strength and the cross-sectional shape of the metal filament 1 are not particularly restricted. For example, the metal filament 1 may have a wire diameter of 0.15 mm to 0.40 mm. As the metal filament 1, a metal filament having a tensile strength of 2,500 MPa or higher can be used. Further, the widthwise cross-sectional shape of the metal filament 1 is also not particularly restricted and may be, for example, elliptical, rectangular, triangular or polygonal; however, it is preferably circular. In the elastomer-metal cord composite 10 of the present invention, a wrapping filament may be used as well when it is necessary to restrain the metal filaments 1 constituting the metal cord 2.

Moreover, in the elastomer-metal cord composite 10 of the present invention, the elastomer 3 coating the metal cord 2 is also not particularly restricted and, for example, any rubber that is conventionally used for coating a metal cord can be employed. In addition, examples of an elastomer that can be preferably used include diene-based rubbers and hydrogenation products thereof, such as natural rubbers (NR), isoprene rubbers (IR), epoxidized natural rubbers, styrene-butadiene rubbers (SBR), butadiene rubbers (BR, high-cis BR and low-cis BR), nitrile rubbers (NBR), hydrogenated NBRs, and hydrogenated SBRs; olefin-based rubbers, such as ethylene-propylene rubbers (EPDM and EPM), maleic acid-modified ethylene-propylene rubbers (M-EPM), butyl rubbers (IIR), copolymers of isobutylene and an aromatic vinyl or diene monomer, acrylic rubbers (ACM), and ionomers; halogen-containing rubbers, such as Br-IIR, Cl-IIR, brominated isobutylene-*p*-methylstyrene copolymers (Br-IPMS), chloroprene rubbers (CR), hydrin rubbers (CHR), chlorosulfonated polyethylene rubbers (CSM), chlorinated polyethylene rubbers (CM), and maleic acid-modified chlorinated polyethylene rubbers (M-CM); silicone rubbers, such as methyl vinyl silicone rubber, dimethyl silicone rubber, and methylphenyl vinyl silicone rubber; sulfur-containing rubbers, such as polysulfide rubbers; fluororubbers, such as vinylidene fluoride-based rubbers, fluorine-containing vinyl ether-based rubbers, tetrafluoroethylene-propylene-based rubbers, fluorine-containing silicone-based rubbers, and fluorine-containing phosphazene-based rubbers; and thermoplastic elastomers, such as styrene-based elastomers, olefin-based elastomers, ester-based elastomers, urethane-based elastomers, and polyamide-based elastomers. These elastomers may be used individually, or two or more thereof may be used in combination. Further, in these elastomers, an age inhibitor, zinc oxide, stearic acid and the like that are usually used in rubber products such as tires and conveyor bels may be incorporated as appropriate, in addition to sulfur, a vulcanization accelerator and carbon black.

The elastomer-metal cord composite of the present invention can be produced by any known method. For example, the elastomer-metal cord composite of the present invention can be produced by parallelly arranging the metal cords according to the present invention at prescribed intervals and subsequently coating the thus arranged metal cords from both above and below with an about 0.5-mm thick sheet made of an elastomer. Further, patterning of the metal filaments can be performed by any conventional method using an ordinary patterning machine.

The tire of the present invention will now be described.

A tire 100 of the present invention includes the elastomer-metal cord composite 10 of the present invention, and examples of the tire 100 include tires for passenger vehicles and tires for trucks and buses. FIG. 6 is a schematic half cross-sectional view illustrating a tire according to one preferred embodiment of the present invention. The illustrated pneumatic tire 100 includes: a tread portion 101 which forms a ground-contact part; a pair of side wall portions 102 which continuously extend inward in the tire radial direction on the respective sides of the tread portion 101; and bead portions 103 which continuously extend on the inner circumferential side of each side wall portion 102.

In the illustrated tire 100, the tread portion 101, the side wall portions 102 and the bead portions 103 are reinforced with a carcass 104, which is composed of a pair of carcass layers toroidally extending from one bead portion 103 to the other bead portion 103. In addition, the tread portion 101 is reinforced with a belt 105, which is composed of at least two layers (a first belt layer 105a and a second belt layer 105b in the illustrated example) that are arranged on the tire radial-direction outer side of the carcass 104 in a crown region. It is noted here that the carcass 104 may be composed of plural carcass layers, and an organic fiber cord extending in a direction substantially perpendicular to the tire circumferential direction, for example, at an angle of 70° to 90°, can be suitably used.

In the tire 100 of the present invention, the above-described elastomer-metal cord composite 10 of the present invention can be used in the first belt layer 105a and the second belt layer 105b. By using the elastomer-metal cord composite 10 of the present invention, the thickness of the steel cord of the first belt layer 105a and that of the second belt layer 105b can be reduced, so that the weight of the tire can be reduced. Moreover, by using the elastomer-metal cord composite 10 of the present invention as a cord of the belt, the durability of the belt and the steering stability can both be improved at the same time.

The tire 100 of the present invention may have any constitution as long as it includes the elastomer-metal cord composite 10 as claimed and other aspects of a specific tire structure are not particularly restricted. In addition, the part to which the elastomer-metal cord composite 10 of the present invention is applied is not restricted to the belt 105. For example, the elastomer-metal cord composite 10 of the present invention may be used as a belt reinforcing layer arranged on the tire radial-direction outer side of the belt 105, or as other reinforcing member. As a gas filled into the tire 100, an air having normal or adjusted oxygen partial pressure, as well as an inert gas such as nitrogen, argon or helium, can be used.

DESCRIPTION OF SYMBOLS

1:     metal filament
2:     metal cord
3:     elastomer
10:    elastomer-metal cord composite
100:   tire (pneumatic tire)
101:   tread portion
102:   side wall portion
103:   bead portion
104:   carcass
105:   belt layer

**Claims**

1. An elastomer-metal cord composite (10) obtained by coating, with an elastomer (3), a metal cord (2) composed of a bundle of two to ten metal filaments (1) that are parallelly aligned in a single row without being twisted together,

   wherein the metal cord (2) comprises at least one pair of adjacent metal filaments (1) being different from each other in at least either of patterning amount (h) and patterning pitch (p) in a direction perpendicular to an extending direction of the metal filaments (1),
   wherein at least one of the metal filaments (1) in the metal cord (2) is a substantially straight metal filament (1b), and
   wherein metal filaments (1) arranged on the respective ends of the metal cord (2) are each the straight metal filament (1b).

2. The elastomer-metal cord composite (10) according to claim 1, wherein a patterning direction of a patterned metal filament (1a) in the metal cord (2) corresponds to a width direction of the metal cord (2).

3. The elastomer-metal cord composite (10) according to claim 1 or 2, wherein the adjacent metal filaments (1) have an elastomer coating ratio of 10% or higher per 50 mm on a widthwise side surface of the metal cord (2).

4. The elastomer-metal cord composite (10) according to any one of claims 1 to 3, wherein the straight metal filament (1b) and the patterned metal filament (1a) are alternately arranged.

5. The elastomer-metal cord composite (10) according to any one of claims 1 to 4, wherein the metal filaments (1) have a patterning amount (h) of 0.03 to 0.30 mm and a patterning pitch (p) of 2 to 30 mm.

6. A tire comprising the elastomer-metal cord composite (10) according to any one of claims 1 to 5.

**Patentansprüche**

1. Elastomer-Metallkord-Verbundstoff (10), der durch Beschichten, mit einem Elastomer (3), eines Metallkords (2) erhalten wird, der aus einem Bündel von zwei bis zehn Metallfilamenten (1) besteht, die parallel in einer einzelnen Reihe ohne zusammenverflochten zu sein, parallel ausgerichtet sind,

   wobei der Metallkord (2) mindestens ein Paar nebeneinanderliegender Metallfilamente (1) umfasst, die voneinander in mindestens einem von einer Musterungsmenge (h) und einem Musterungsabstand (b) in einer Richtung senkrecht zu einer sich erstreckenden Richtung der Metallfilamente (1) verschieden sind,
   wobei mindestens eines der Metallfilamente (1) in dem Metallkord (2) ein im Wesentlichen gerades Metallfilament (1b) ist und
   wobei Metallfilamente (1), die an den jeweiligen Enden des Metallkords (2) angeordnet sind, jeweils das gerade Metallfilament (1b) sind.

2. Elastomer-Metallkord-Verbundstoff (10) nach Anspruch 1, wobei eine Musterrichtung eines bemusterten Metallfilaments (1a) in dem Metallkord (2) einer Breitenrichtung des Metallkords (2) entspricht.

3. Elastomer-Metallkord-Verbundstoff (10) nach Anspruch 1 oder 2, wobei die nebeneinanderliegenden Metallfilamente (1) ein Elastomerbeschichtungsverhältnis von 10 % oder höher pro 50 mm auf einer breitenmäßigen Seitenfläche des Metallkords (2) aufweisen.

4. Elastomer-Metallkord-Verbundstoff (10) nach einem der Ansprüche 1 bis 3, wobei das gerade Metallfilament (1b) und das bemusterte Metallfilament (1a) abwechselnd angeordnet sind.

5. Elastomer-Metallkord-Verbundstoff (10) nach einem der Ansprüche 1 bis 4, wobei die Metallfilamente (1) eine Musterungsmenge (h) von 0,03 bis 0,30 mm und einen Musterungsabstand (p) von 2 bis 30 mm aufweisen.

6. Reifen umfassend den Elastomer-Metallkord-Verbundstoff (10) nach einem der Ansprüche 1 bis 5.

**Revendications**

1. Composite de câblé élastomère-métal (10) obtenu par le revêtement, avec un élastomère (3), d'un câblé métallique (2) composé d'un faisceau de deux à dix filaments métalliques (1) qui sont alignés parallèlement en une rangée unique sans être torsadés ensemble,

le câblé métallique (2) comprenant au moins une paire de filaments métalliques (1) adjacents différents l'un de l'autre dans au moins l'un d'une quantité de motif (h) et d'un pas de motif (p) dans un sens perpendiculaire à un sens d'extension des filaments métalliques (1),
au moins l'un des filaments métalliques (1) dans le câblé métallique (2) étant un filament métallique sensiblement droit (1b), et
les filaments métalliques (1) disposés sur les extrémités respectives du câblé métallique (2) étant chacun le filament métallique droit (1b).

2. Composite de câblé élastomère-métal (10) selon la revendication 1, un sens de motif d'un filament métallique à motif (1a) dans le câblé métallique (2) correspondant à un sens de la largeur du câblé métallique (2).

3. Composite de câblé élastomère-métal (10) selon la revendication 1 ou 2, les filaments métalliques (1) adjacents ayant un rapport de revêtement d'élastomère de 10 % ou plus par 50 mm sur une surface latérale dans le sens de la largeur du câblé métallique (2).

4. Composite de câblé élastomère-métal (10) selon l'une quelconque des revendications 1 à 3, le filament métallique droit (1b) et le filament métallique à motif (la) étant disposés de manière alternée.

5. Composite de câblé élastomère-métal (10) selon l'une quelconque des revendications 1 à 4, les filaments métalliques (1) ayant une quantité de motif (h) de 0,03 à 0,30 mm et un pas de motif (p) de 2 à 30 mm.

6. Pneumatique comprenant le composite de câblé élastomère-métal (10) selon l'une quelconque des revendications 1 à 5.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000198311 A
- EP 1256652 A2
- JP 2000190707 A
- JP 2001334810 A